# EUROPEAN PATENT SPECIFICATION

(11) **EP 1 865 641 B1**
(45) Date of publication and mention of the grant of the patent: **29.07.2009**
(21) Application number: 07109400.7
(22) Date of filing: 01.06.2007
(51) Int. Cl.: H04J 14/02, H04B 10/17, H04B 10/08

(54) **Opto-electronic calibration and feedback control device for optical wavelength division multiplexing transmission system**
Optoelektronische Vorrichtung zur Kalibrierung und Rückkopplungsregelung in einem optischen WDM-Übertragungsnetzwerk
Dispositif opto-électronique d'étalonnage et d'asservissement pour un système de transmission optique à multiplexage en longueur d'onde

(30) Priority: 06.06.2006 FR 0605003
(43) Date of publication of application: 12.12.2007
(73) Proprietor: Alcatel Lucent, 75008 Paris (FR)
(72) Inventor: Bisson, Arnaud, 75014, Paris (FR); Letellier Vincent, Paris 75013 (FR); Gautheron Olivier, Montigny le Bretonneux 78180 (FR); Courtois, Olivier, 91620 La Ville Du Bois (FR)
(74) Representative: Shamsaei Far, Hassan

(56) References cited:
- EP-A1- 0 994 585
- EP-A1- 1 213 865
- EP-A2- 0 949 776
- EP-A2- 1 292 056
- WO-A2-20/06031340
- GB-A- 2 310 096
- US-A- 5 825 530
- MANNA M ET AL: "Impact of spectral hole burning on initial loading scenarios in DWDM submarine cable systems" LASERS AND ELECTRO-OPTICS SOCIETY, 2004. LEOS 2004. THE 17TH ANNUAL MEETING OF THE IEEE RIO GRANDE, PUERTO RICO NOV. 8-9, 2004, PISCATAWAY, NJ, USA,IEEE, vol. 2, 8 November 2004 (2004-11-08), pages 541-542, XP010748914 ISBN: 0-7803-8557-8

## Description

The field of the invention is that of fibre-optic telecommunications using WDM, an acronym for wavelength division multiplexing, for transmission of the signals. These systems transmit over a series of optical channels. The optical frequencies of these channels belong to the same spectral band and are regularly spaced out according to a given comb configuration. These telecommunications systems generally comprise a plurality of repeaters.

In such systems, optical amplifiers are provided at regular intervals in order to compensate for the losses due to the transmission line. In such a chain of amplifiers, a constant optical power is sought for each channel transmitted at the output of each of the amplifiers in order to limit the nonlinear effects which are always detrimental to the correct operation of the system, especially at high date rates.

In the case of wavelength division multiplexing transmissions, this problem is accentuated owing to the fact that all the possible channels are not necessarily present over the whole transmission chain. Indeed, depending on the topology of the network, certain channels may only be present on certain portions of the network. Furthermore, following failures of opto-electronic components or breaks in the optical fibre, some channels may disappear from the network. If only a few channels are present, since the amplifiers provide a constant power, this will necessarily be divided up over the channels present. These channels will therefore be greatly amplified, thus adversely affecting the quality of their transmission.

A first solution consists in adjusting the output power of the amplifiers as a function of their input powers. They thus operate in a constant gain mode rather than a constant output power mode. Since the spectral response, also referred to as gain curve or transfer function, of an amplifier depends on its operating point, in other words on the spectral distribution of the input signal and on the power of its pumps, such a solution cannot handle a very wide variation in the number of channels and is limited to short transmissions.

A second possible solution consists in adding a loading wavelength to the various wavelengths of the signal, also referred to as multiplex or comb of wavelengths. The power at the emission of this loading wavelength can be adjusted so as to maintain the output power of the useful signals of the multiplex constant. This solution however has certain drawbacks. The power of the loading wavelength may be much higher than those of the multiplex signals, causing a degradation in the transmission for the wavelengths of the multiplex close to this loading wavelength. It is estimated that from three to five channels are thus unusable. Furthermore, the shape of the gain of the amplifiers depends on the spectral distribution of the input signal. Thus, the spectral response of the amplifier is optimized for a uniform loading over its whole band. For a reduced number of channels, the power distribution changes. It concentrates itself around the loading wavelength, which modifies the gain curve of the amplifier, creating a disparity between the channels. This disparity will be accentuated at each amplifier encountered. In order to minimize this effect, one solution consists in using several loading wavelengths distributed over the useful band of the amplifier, which increases the complexity of the system control again rendering certain WDM channels unusable.

A third possible solution consists in replacing the loading wavelength(s) using the same array of wavelengths as the useful channels by a plurality of wavelengths situated in between the useful channels of the WDM spectrum. A large part of the preceding problems are avoided. The European Patent EP 0 994 585, filed by the present applicant, proposes a solution of this type. In order to form the wideband loading signal, the device described comprises a white light source passing through a series of rejection filters, the filters eliminating the wavelengths situated in the neighbourhood of the wavelengths of the multiplex from the spectrum of the white light. However, the practical construction of this type of device can pose technical fabrication problems. Indeed, if there are a large number of channels, the final attenuation caused by the cascade of rejection filters becomes too high. In addition, this cascade of filters produces an effect referred to as 'tilt' one the loading signal which again needs to be compensated by a filter. The International Application WO 2006/031340 proposes another solution of this type. The device described comprises a combiner configured to combine information signals on utilized channels of a WDM system and dummy tones on subset of unutilized channels of the WDM system.

These systems also pose a second problem. When this type of system is installed, it is important to test, during installation, all the channels potentially available, even if these are not immediately put into service. These tests are generally carried out by means of lasers whose emission wavelength must be perfectly matched to the channels of the system. In current systems, the number of potential channels can reach one hundred. The cost of installation then becomes very high.

Accordingly, the device according to the invention allows both the problems of installation and the problems of harmonizing the powers of the various channels throughout the optical transmission system to be solved in a simple manner.

The heart of the invention rests on the use of an optical interlacer/de-interlacer, known as an 'interleaver', with two optical inputs allowing signals comprising regularly-spaced optical frequency combs to be delivered. A simple switching system allows the device to go from a calibration and monitoring position to a feedback control position.

More precisely, the subject of the invention is an opto-electronic calibration and feedback control device for a fibre-optic telecommunications system of the wavelength division multiplexing type in which the useful channels belong to a given spectral band and whose optical frequencies are regularly spaced out according to a given comb configuration, the said device comprising at least:
- one spontaneous-emission amplifier of the ASE type supplying an optical signal in a spectral band substantially equivalent to the spectral band of the telecommunications system;
**characterized in that** the said opto-electronic device also comprises:
- a device for adjusting the optical power output from the amplifier;
- a two-way optical switch disposed at the output of the said attenuator;
- an optical spectrum interleaver having first and second inputs and one output, the selection of the input connected to the output of the optical attenuator being provided by the said switch, the said interleaver comprising optical means allowing the following emissions, starting from the spectrum output from the amplifier:
   o when the first input of the interleaver is connected to the amplifier, a first signal comprising a comb of regularly spaced optical frequencies corresponding to the comb of the frequencies of the telecommunications system;
   o when the second input of the interleaver is connected to the amplifier, a second signal comprising a comb of regularly spaced optical frequencies that are interleaved with the frequencies of the preceding comb;
- first means for coupling the said interleaver to the fibre-optic telecommunications system;
- feedback control means comprising:
   o means for measuring the total power transmitted by the telecommunications system and the opto-electronic device;
   o means for controlling, as a function of this measurement, the power of the ASE by the device for adjusting the optical power.

Advantageously, an optical filtering device is placed after the amplifier in order to emit a flat spectrum.

The invention also relates to a fibre-optic telecommunications system comprising at least one opto-electronic calibration and feedback control device as previously defined, the system also comprising a second feedback control device comprising:
- a second spontaneous-emission amplifier of the ASE type supplying an optical signal in a spectral band substantially equivalent to the spectral band of the telecommunications system;
- a second variable-attenuation device for adjusting the optical power disposed at the output of the spontaneous-emission amplifier;
- a second optical spectrum interleaver connected to the said attenuator comprising optical means allowing a third signal to be emitted, starting from the spectrum output from the amplifier, which signal comprises a comb of regularly spaced optical frequencies interleaved with the comb of the frequencies of the telecommunications system;
- second means for coupling said interleaver to the fibre-optic telecommunications system;
- second feedback control means comprising:
   o means for measuring the total power transmitted by the telecommunications system and by the second opto-electronic device;
   o means for adjusting, as a function of this measurement, the attenuation of the second variable attenuator.

Advantageously, an optical filtering device is also disposed between the second amplifier and the second attenuator of the second feedback control device.

Advantageously, the devices for adjusting the optical power can be either optical attenuators with variable attenuation, or means for controlling the pump current of the spontaneous-emission amplifier. This second solution has the advantage of simplicity. It does not however allow as fine an adjustment as does the use of an optical attenuator.

The invention will be better understood and other advantages will become apparent upon reading the description that follows, presented by way of non-limiting example and with reference to the appended figures, in which:
- Figure 1 shows a block diagram of an opto-electronic calibration and feedback control device according to the invention;
- Figure 2 shows the spectral distribution of the signals produced by the interleaver;
- Figures 3a, 3b and 3c show the variations in the amplitude of the spectrum produced by the interleaver after coupling with the useful channels, as a function of the number of channels present in the emitted signal;
- Figure 4 shows a block diagram of a telecommunications system according to the invention comprising two feedback control devices according to the invention.

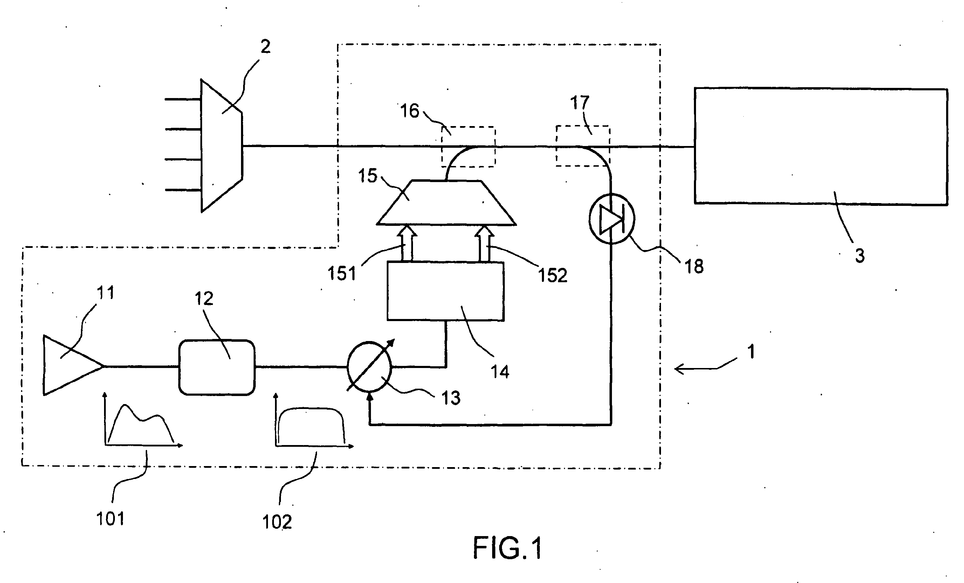

Figure 1 shows a block diagram of a telecommunications system comprising a calibration and feedback control device according to the invention. It comprises:
- A coupling system 2 of the wavelength division multiplexing type WDM emitting a signal composed of channels belonging to a given spectral band and whose optical frequencies are regularly spaced out according to a given comb configuration. This multiplexer is generally preceded by a certain number of sources each emitting on a precise frequency and that it multiplexes in order to form a single signal or multiplex;
- The opto-electronic calibration and feedback control device 1 itself;
- The whole of the transmission and receiving chain 3 which is not detailed in this figure.

The opto-electronic device 1 essentially comprises:
- an amplifier 11, source of spontaneous emission, also referred to as ASE, which is typically an EDFA, acronym for Erbium Doped Fiber Amplifier, or a semiconductor optical amplifier known as an SOA. This amplifier supplies an optical signal in a spectral band substantially equivalent to the spectral band of the telecommunications system. The spectral distribution of this signal is shown in the diagram 101 incorporated into Figure 1;
- an optical filtering device 12 disposed at the output of the amplifier allowing a signal of constant power, over a large part of its emission spectrum, to be obtained at its output as shown in diagram 102 in Figure 1;
- an optical attenuator 13 with variable attenuation disposed at the output of the filtering device 12 ;
- a two-way optical switch 14 disposed at the output of the said attenuator;
- an optical spectrum interlacer/de-interlacer 15 having first and second inputs and one output. The term employed in the industry for this device is 'interleaver'. The selection of the input connected to the output of the optical attenuator 13 is provided by the switch 14. The said interleaver comprises optical means allowing signals comprising combs of regularly spaced optical frequencies to be emitted, starting from the spectrum output from the amplifier 11;
- first means 16 for coupling the said interleaver 15 to the fibre-optic telecommunications system. These are generally an optical coupler of the Y type with two inputs and one output;
- feedback control means comprising:
   ■ second means 17 for coupling the device 1 to the fibre-optic telecommunications system. These are generally a coupler of the Y type. These coupling means are disposed after the first coupling means 16 in such a manner as to take into account both the useful signal and the signal coming from the interleaver;
   ■ means for the photo-detection of the total signal emitted by the emitter 2 and the opto-electronic device 1 ;
   ■ means for adjusting, as a function of this measurement, the attenuation of the variable attenuator 13.

It should be noted that the various components of the opto-electronic device are opto-electronic or optical components which may readily be fabricated by those skilled in the art. It should also be noted that it would be possible to replace the variable attenuator by any other means for adjusting the optical power emitted by the ASE. In particular, it would be possible to act directly on the emitted power by controlling the pump current of the spontaneous-emission amplifier.

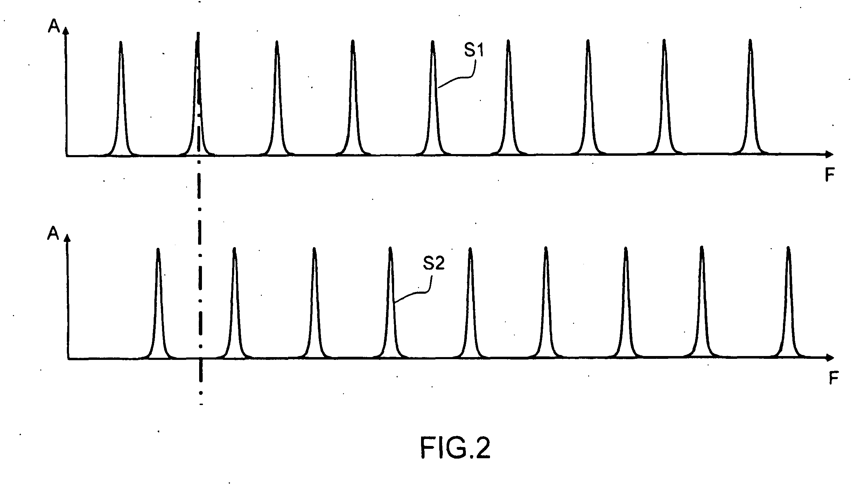

Figure 2 shows the form of the signal emitted by the interleaver according to the chosen input 151 or 152.

When the first input 151 of the interleaver 15 is connected to the amplifier 11, the first signal S1 comprises a comb of regularly-spaced optical frequencies corresponding to the frequency comb of the telecommunications system. When the second input 152 of the interleaver 15 is connected to the amplifier 11, the second signal S2 comprises a comb of regularly-spaced optical frequencies that are interleaved with the frequencies of the preceding comb S1. The dotted-dashed vertical line in Figure 2 demonstrates the frequency shift between the two spectra.

As has been said, the opto-electronic device 1 has a dual operation. It can be used either for calibrating the fibre-optic telecommunications system, or for feedback controlling the power transmitted through the network.

When it is used for calibrating the system, the useful channels are switched off or the coupling means 16 are disconnected and the switch 14 is set in the position for selecting the first input of the interleaver. In this configuration, the signal S1 is injected into the transmission and receiving chain 3 by means of the optical coupler 16. The signal S1 comprises a comb of regularly-spaced optical frequencies corresponding to the frequency comb of the telecommunications system. As a result, it is possible to calibrate the whole of the chain with this signal.

When the opto-electronic device 1 is used to feedback control the power transmitted through the network, the various WDM channels are activated and emit a signal S. The switch 14 is set in the position for selecting the second input of the interleaver. In this configuration, the signal S2 is injected into the transmission and receiving chain 3 by means of the optical coupler 16 where it is superimposed onto the various channels coming from the emission source. A total signal whose spectrum comprises two combs of interleaved frequencies is thus obtained. The Y coupler 17 recovers a part of this signal. This signal is measured by the photo-detection means 18. The attenuation of the variable attenuator 13 is a function of this measurement such that the total power of the signal remains substantially constant.

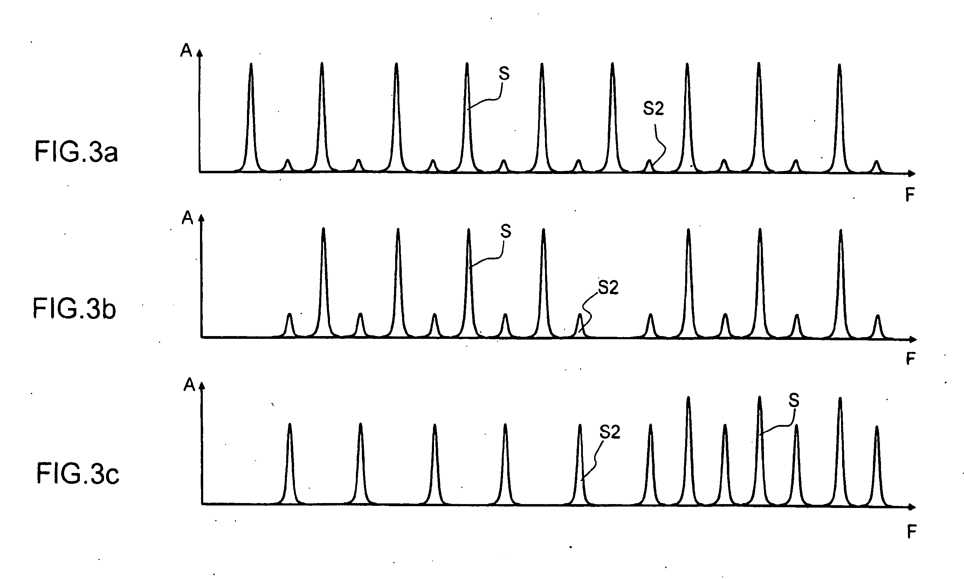

Figures 3a, 3b and 3c illustrate this principle of operation. These figures show the amplitudes of the frequency combs of the signals S and S2 in various configurations. In Figure 3a, all the useful channels are present. In this case, the power of the signal S is high and the feedback control device maintains the signal S2 at a low power. In Figure 3b, some channels are absent. In this case, the power of the signal S is lower and the feedback control device increases the signal S2 to higher power levels in order to compensate for the loss of power of the signal S. In Figure 3c, most of the channels are absent. In this case, the power of the signal S has significantly decreased and the feedback control device increases the signal S2 so as to compensate for the loss of power of the signal S. Nevertheless, the maximum powers of the frequency comb of the signal S2 remain at a similar level to those of the frequency comb of the signal S.

Thus, however many channels are present, the total power transmitted into the whole of the transmission and receiving chain 3 remains substantially constant and uniformly distributed over the whole emission spectrum of the emitter, which is the desired objective.

By way of example, the power balance of the emitter and of the opto-electronic device is established as follows:
- Emitter part: It comprises 96 channels respectively emitting 0 dBm, making a total of around 20 dBm which are multiplexed by a multiplexer. The attenuation of this multiplexer generally reaches 14 dB. As a result, the power of the signal at the output of the multiplexer is around 6 dBm. If the coupler 16 is an 80/20 Y coupler, it will therefore transmit into the transmission chain a useful signal of 5 dBm.
- Opto-electronic device: The amplifier 11 can emit 18 dBm after filtering. The attenuator has a minimum attenuation of 1 dB. At the output of the attenuator, the signal still has a power of 17 dBm. The interleaver has an overall attenuation of 5 dB. Consequently, the signals S1 and S2 have a total power of approximately 12 dBm. With the 80/20 Y coupler defined previously, the transmitted signals S1 and S2 will therefore have a maximum power of 5 dBm, comparable to that of the useful signal which is the desired objective.

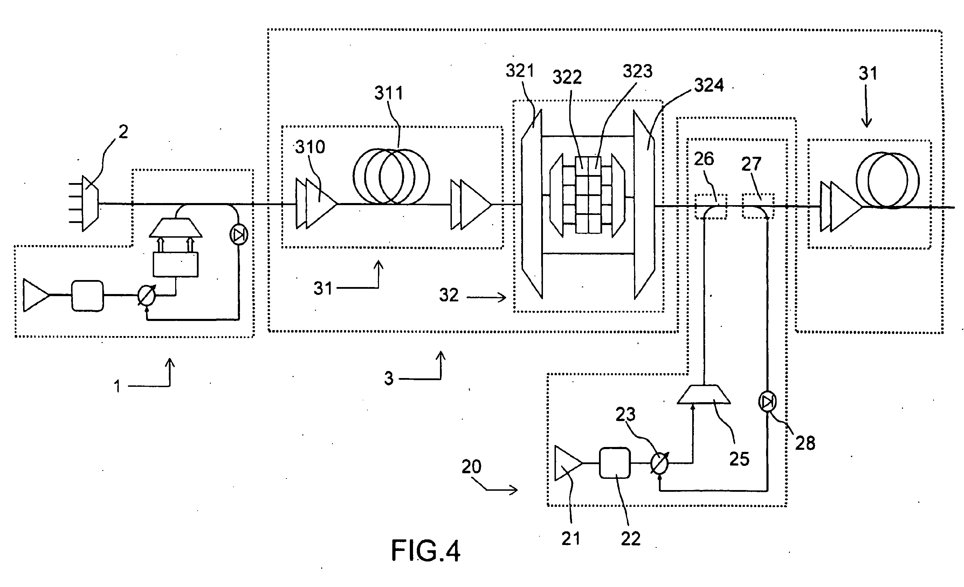

As illustrated in Figure 4, a second feedback control device may be used. A transmission and receiving chain 3 generally comprises
- One or more transmission-amplification assemblies 31 comprising one or more fibre optic links 311 and optical amplifiers 310. In Figure 4, two assemblies 31 are shown;
- one or more optical signal add/drop multiplexers 32 using the acronym OADM. Each assembly generally comprises at least one demultiplexer 321 - multiplexer 324 assembly, electro-optic receiving and transmission devices 322 and 323 and coupling devices allowing signals external to the transmission chain 26 and 27 to be transmitted or received.

After passing through the OADM, certain channels will have been dropped, others added. As a result, it can be advantageous to re-introduce a signal of the S2 type comprising a comb of regularly-spaced optical frequencies interleaved with the frequencies of the comb of the main signal. A signal whose total power is constant and uniformly distributed is thus found at the output of the module 27. This function is provided, as indicated in Figure 4, by a device 20 close to that already implemented within the source.

This device essentially comprises:
- a second spontaneous-emission amplifier 21 of the ASE type supplying an optical signal in a spectral band substantially equivalent to the spectral band of the telecommunications system;
- an optical filtering device 22 disposed at the output of the said amplifier 21;
- a second optical attenuator 23 with variable attenuation disposed at the output of the spontaneous-emission amplifier 21. It should also be noted that the variable attenuator could be replaced by any other means for adjusting the optical power emitted by the ASE. In particular, it would be possible to act directly on the emitted power by controlling the pump current of the spontaneous-emission amplifier;
- a second optical spectrum interweaver 25 connected to the said attenuator comprising optical means allowing a third signal to be emitted, starting from the spectrum output from the amplifier, which signal comprises a comb of regularly spaced optical frequencies interleaved with the comb of the frequencies of the telecommunications system;
- seconds means 26 for coupling the said interweaver 25 to the fibre-optic telecommunications system;
- second feedback control means comprising:
   o second means 27 for coupling the device 20 to the fibre-optic telecommunications system. These are generally an optical coupler of the Y type. These coupling means are disposed after the second coupling means 26;
   o means for the photo-detection of the total signal emitted by the telecommunications system and the opto-electronic device 20 ;
   o means for adjusting, as a function of this measurement, the attenuation of the variable attenuator 23.

The operation of this second device will not be detailed given that it is identical to that of the device 1 described above when the latter operates in feedback control mode.

In Figure 4, the device 20 is introduced at the output of an OADM. It would be possible to actually place it inside an OADM in order to feedback control one part only of the signals.

## Claims

1. Opto-electronic calibration and feedback control device (1) for a fibre-optic telecommunications system of the wavelength division multiplexing type in which the channels belong to a given spectral band and whose optical frequencies are regularly spaced out according to a given comb configuration, the said device comprising at least:
• one spontaneous-emission amplifier (11) of the ASE type supplying an optical signal in a spectral band substantially equivalent to the spectral band of the telecommunications system;
**characterized in that** the said opto-electronic device also comprises:
• an optical attenuator (13) for adjusting the optical power output from the amplifier;
• a two-way optical switch (14) disposed at the output of the said attenuator;
• an optical spectrum interleaver (15) having first and second inputs and one output, the selection of the input connected to the output of the optical attenuator being provided by the said switch, the said interleaver comprising optical means allowing the following emissions, starting from the spectrum output from the amplifier:
○ when the first input of the interleaver is connected to the amplifier, a first signal comprising a comb of regularly spaced optical frequencies corresponding to the comb of the frequencies of the telecommunications system;
○ when the second input of the interleaver is connected to the amplifier, a second signal comprising a comb of regularly spaced optical frequencies that are interleaved with the frequencies of the preceding comb;
• first means (16) for coupling the said interleaver to the fibre-optic telecommunications system;
• feedback control means comprising
○ means (17, 18) for measuring the total power emitted by the telecommunications system and by the opto-electronic device;
○ means for adjusting, as a function of this measurement, the emitted optical power by means of the adjustment device (13).

2. Opto-electronic device according to Claim 1, **characterized in that** an optical filtering device (12) is disposed between the amplifier and the device for adjusting the optical power.

3. Opto-electronic device according to Claim 1, **characterized in that** the device for adjusting the optical power is an optical attenuator with variable attenuation.

4. Opto-electronic device according to Claim 1, **characterized in that** the device for adjusting the optical power comprises means for controlling the pump current of the spontaneous-emission amplifier.

5. Fibre-optic telecommunications system comprising at least one opto-electronic calibration and feedback control device according to either of Claims 1 and 2, **characterized in that** the system comprises a second feedback control device (20) comprising:
• a second spontaneous-emission amplifier (21) of the ASE type supplying an optical signal in a spectral band substantially equivalent to the spectral band of the telecommunications system;
• a second device (23) for adjusting the optical power output from the amplifier;
• a second optical spectrum interleaver (25) connected to the said attenuator comprising optical means allowing a third signal to be emitted, starting from the spectrum output from the amplifier, which signal comprises a comb of regularly-spaced optical frequencies interleaved with the comb of the frequencies of the telecommunications system;
• second means (26) for coupling said interleaver to the fibre-optic telecommunications system;
• second feedback control means comprising:
○ means (27, 28) for measuring the total power emitted by the telecommunications system and by the second opto-electronic device;
○ means for adjusting, as a function of this measurement, the attenuation of the second variable attenuator and the emitted optical power by means of the adjustment device (23).

6. Telecommunications system according to Claim 5, **characterized in that** an optical filtering device (22) is disposed between the second amplifier and the second attenuator.

## Patentansprüche

1. Optoelektronische Vorrichtung zur Kalibrierung und Rückkopplungsregelung in einem optischen WDM-Übertragungsnetzwerk vom Typ Wellenlängenmultiplex, wobei die Kanäle einem gegebenen Spektralband angehören und die optischen Frequenzen entsprechend einer gegebenen Kammkonfiguration in regelmäßige Abeständen voneinander ungeordnet sind, wobei die besagte Vorrichtung mindestens umfasst:
- Einen Spontantemissions-Verstärker (11) vom Typ ASE, welcher ein optisches Signal in einem Spektralband bereitstellt, welches im Wesentlichen dem Spektralband des Telekommunikationssystem entspricht;
**dadurch gekennzeichnet, dass** die besagte optoelektronische Vorrichtung ebenfalls umfasst:
• Ein optisches Dämpfungsglied (13) zum Justieren der von dem Verstärker ausgegebenen optischen Leistung,
• einen optischen 2-Weg-Schalter (14), welcher am Ausgang des besagten Dämpfungsglieds angeordnet ist;
• einen Interleaver für das optische Spektrum (15) mit einem ersten und einem zweiten Eingang und einem Ausgang, wobei die Auswahl des an den Ausgang des optischen Dämpfungsglieds angeschlossenen Eingangs durch den besagten Schalter erfolgt, wobei der besagte Interleaver optische Mittel umfasst, welche die folgenden Emissionen, beginnend am vom Verstärker ausgegebenen Spektrum, ermöglichten:
○ Wenn der erste Eingang des Interleavers an den Verstärker angeschlossen ist, ein erstes Signal mit einem Kamm von regelmäßig voneinander beabstandeten optischen Frequenzen, welcher dem Kamm der Frequenzen des Telekommunikationssystems entspricht;
○ wenn der zweite Eingang des Interleavers an den Verstärkter angeschlossen ist, ein zweites Signal, welches einen Kamm von regelmäßig voneinander beabstandeten optischen Frequenzen, die mit den Frequenzen des vorangehenden Kamms verschachtelt sind, umfasst;
• erste Mittel (16) zum Koppeln des besagten Interleavers an das faseroptische Telekommunikationssystem;
• Rückkopptungsregelungsmittel, umfassend:
○ Mittel (17, 18) zum Messen der von dem Telekommunikationssystem und von der optoelektronischen Vorrichtung ausgegebenen Gesamtleistung;
○ Mittel zum Justieren, als eine Funktion dieser Messung, der ausgegebenen optischen Leistung anhand der Justiervorrichtung (13).

2. Optoelektronische Vorrichtung nach Anspruch 1, **dadurch gekennzeichnet, dass** eine optische Filtervorrichtung (12) zwischen dem Verstärker und der Vorrichtung zum Justieren der optischen Leistung angeordnet ist.

3. Optoelektronische Vorrichtung nach Anspruch 1, **dadurch gekennzeichnet, dass** die Justiervorrichtung der optischen Leistung ein optisches Dämpfungsglied mit variabler Dämpfung ist.

4. Optoelektronische Vorrichtung nach Anspruch 1, **dadurch gekennzeichnet, dass** die Justiervorrichtung der optischen Leistung Mittel zum Steuern der Strompumpe des Spontanemissions-Verstärkers umfasst.

5. Faseroptisches Telekommunicationssystem mit mindestens einem optischen Add/Drop-Multiplexer (OADM) und mindestens einer optoelektronischen Vorrichtung zur Kalibrierung und Rückkopplungsregelung nach einem beliebigen der Ansprüche 1 und 2, **dadurch gekennzeichnet, dass** das System am Ausgang oder im Inneren des besagten OADMs eine zweite Rückkopplungsregelungsvorrichtung (20) einschließt, welche umfasst:
• Einen zweiten Spontanemissions-Verstärker (21) vom Typ ASE, welcher ein optisches Signal in einem Spektralband bereitstellt, welches im Wesentlichen dem Spektralband des Telekommunikationssystem entspricht;
• ein zweites optisches Dämpfungsglied (23) zum Justieren der von dem Verstärker ausgegebenen optischen Leistung,
• einen zweiten Interleaver für das optische Spektrum (25), welcher an den besagten Dämpfer angeschlossen ist und optische Mittel umfasst, welche die Emission eines dritten Signals, beginnend am von Verstärker ausgegebenen Spektrum, ermöglichten, wobei das besagte Signal einen Kamm von regelmäßig voneinander beabstandeten optischen Frequenzen, welcher mit dem Kamm der Frequenzen des Telekommunikationssystems verschachtelt ist, umfasst;
• zweite Mittel (26) zum Koppeln des besagten Interleavers an das faseroptische Telekommunikationssystem;
• zweite Rückkopplungsregelungsmittel, umfassend:
○ Mittel (27, 28) zum Messen der von dem Telekommunikationssystem und von der zweiten optoelektronischen Vorrichtung ausgegebenen Gesamtleistung;
○ Mittel zum Justieren, als eine Funktion dieser Messung, der Dämpfung des zweiten variablen Dämpfungsglieds und der ausgegebenen optischen Leistung anhand der Justiervorrichtung (23).

6. Telekommunikationssystem nach Anspruch 5, **dadurch gekennzeichnet, dass** eine optische Filtervorrichtung (22) zwischen dem zweiten Verstärker und dem zweiten Dämpfer angeordnet ist.

## Revendications

1. Dispositif d'étalonnage opto-électronique et de contrôle de réaction (1) pour un système de télécommunications à fibre optique du type multiplexage par répartition en longueur d'onde dans lequel les canaux appartiennent à une bande spectrale donnée et dont les fréquences optiques sont régulièrement espacées selon une configuration en peigne adonnée, ledit dispositif comprenant au moins :
• un amplificateur à émission spontanée (11) du type ASE fournissant un signal optique dans une bande spectrale sensiblement équivalente à la bande spectrale du système de télécommunications ;
**caractérisé en ce que** ledit dispositif opto-électronique comprend également :
• un atténuateur optique (13) pour régler la puissance optique en sortie provenant de l'amplificateur ;
• un commutateur optique bidirectionnel (14) disposé à la sortie dudit atténuateur ;
• un entrelaceur de spectre optique (15) comportent des première et seconde entrées et une sortie, la sélection de l'entrée connectée à la sortie de l'atténuateur optique étant fournie par ledit commutateur, ledit entrelaceur comprenant des moyens otiques permettant les émissions suivantes, en commençant par la sortie de spectre de l'amplificateur :
○ lorsque la première entrée de l'entrelaceur est connectée à l'amplificateur, un premier signal comprenant un peigne de fréquences optiques régulièrement espacées correspondant au peigne des fréquences du système de télécommunications ;
○ lorsque la seconde entrée de l'entrelaceur est connectée à l'amplificateur, un deuxième signal comprenant un peigne de fréquences optiques régulièrement espacées qui sont entrelacées avec les fréquences du peigne précédent ;
• des premiers moyen (16) pour coupler ledit entrelaceur au système de télécommunications à fibre optique ;
• des moyens de contrôle de réaction comprenant :
○ moyens (17, 18) pour mesurer l'énergie totale émise par le système de télécommunications et par le dispositif opto-électronique ;
○ moyens pour régler, en fonction de cette mesure, la puissance optique émise, au moyen du dispositif de réglage (13).

2. Dispositif opto-électronique selon la revendication 1, **caractérisé en ce qu'**un dispositif de filtrage optique (12) est disposé entre l'amplificateur et le dispositif de réglage de puissance optique.

3. Dispositif opto-électronique selon la revendication, 1, **caractérisé en ce que** le dispositif de réglage de puissance optique est un atténuateur optique avec atténuation variable.

4. Dispositif opto-électronique selon la revendication 1, **caractérisé en ce que** le dispositif de réglage de puissance optique comprend des moyens pour contrôler le courant de la pompe de l'amplificateur à émission spontanée.

5. Système de télécommunications à fibre optique comprenant au moins un multiplexeur optique d'insertion-extraction (OADM) et au moins un dispositif d'étalonnage opto-électronique et de contrôle de réaction selon l'une ou l'autre des revendications 1 et 2, **caractérisé en ce que** le système comprend, à la sortie ou à l'intérieur dudit OADM, un second dispositif de contrôle de réaction (20) comprenant :
• un second amplificateur à émission spontanée (21) du type ASE appliquant un signal optique dans une bande spectrale sensiblement équivalente à la bande spectrale du système de télécommunications ;
• un second atténuateur optique (23) pour régler la puissance optique en sortie provenant de l'amplificateur ;
• un second entrelaceur de optique (25) connecté audit atténuateur, comprenant des moyens optiques permettant d'émettre un troisième signal, en commençant par la sortie de spectre de l'amplificateur, lequel signal comprend un peigne de fréquences optiques régulièrement espacées entrelacé avec lie peigne des fréquences du système de télécommunications;
• des seconds moyens) pour coupler ledit entrelaceur au système de télécommunications à fibre otique ;
• des seconds moyens de contrôle de réaction, comprenant :
○ moyens (27, 28) pour mesurer l'énergie totale émise par le système de télécommunications et par le second dispositif opto-électronique ;
○ moyens pour régler, en fonction de cette mesure, l'atténuation du atténuateur variable et la puissance optique au moyen du dispositif de régalage (23).

6. Système de télécommunications selon la revendication 5, **caractérisé en ce qu'**un dispositif de optique (22) est disposé entre le second amplificateur et le second atténuateur.
